# EUROPÄISCHE PATENTSCHRIFT

(11) **EP 0 901 401 B1**
(45) Veröffentlichungstag und Bekanntmachung des Hinweises auf die Patenterteilung: **09.10.2002**
(21) Anmeldenummer: 97923809.4
(22) Anmeldetag: 08.05.1997
(51) Int. Cl.: A63B 27/00

(54) **HILFSMITTEL ZUM BESTEIGEN VON BÄUMEN, MASTEN UND DERGLEICHEN**
AID FOR CLIMBING TREES, POLES AND THE LIKE
DISPOSITIF AUXILIAIRE POUR GRIMPER AUX MATS, ARBRES ET SIMILAIRES

(30) Priorität: 09.05.1996 DE 29608382 U
(43) Veröffentlichungstag der Anmeldung: 17.03.1999
(73) Patentinhaber: Kilcioglu, Mehmet Ali, 70199 Stuttgart (DE)
(72) Erfinder: STEIDINGER, Heiko, D-73037 Göppingen (DE)
(86) Internationale Anmeldenummer: DE9700962
(87) Internationale Veröffentlichungsnummer: WO97043016

(56) Entgegenhaltungen:
- WO-A-93/14824
- CA-A- 1 266 760
- FR-A- 699 522
- US-A- 5 341 896

## Beschreibung

Die Erfindung betrifft ein Hilfsmittel zum Besteigen von Bäumen, Masten oder dergleichen, das das Erklimmen eines Baumes, Mastes oder dgl. erleichtert und zugleich als wirksame Absturzsicherung dient.

Im Freileitungsbau und in der Forstwirtschaft müssem Personen häufig, um Arbeiten durchzuführen, auf Masten oder Bäume steigen. Dazu tragen die Personen üblicherweise Aufstiegshilfen wie Klettersporne oder Steigeisen an den Füßen. Diese Aufstiegshilfen dienen dazu, um mit dem Mast in Eingriff zu kommen und die Person am Mast abzustützen. In Verbindung mit diesen Aufstiegshilfen benutzen solche Personen ein Halteseil, das um die der Person abgewandten Seite des Mastes herumgeführt und an einem Sicherungsgeschirr, im einfachsten Fall einem Hüftgurt oder Leibriemen, an der betreffenden Person befestigt werden kann. Dieses Halteseil wird in erster Linie dafür verwandt, um die betreffende Person beim Arbeiten abzustützen und deren Beine zu entlasten. Allerdings kann es auch dazu benutzt werden, das Erklimmen des Mastes zu unterstützen, indem das Halteseil am Mast hochgeschoben wird, wobei die Seilspannung als Kletterhilfe benutzt wird.

Für den Fall, daß die Aufstiegshilfen vom Mast abgleiten oder sich aus einem anderen Grund außer Eingriff mit dem Mast kommem, ist die Person wenigstens vorübergehend auf das Halteseil angewiesen, um einen Absturz zu verhindern. Gerät dabei das Halteseil ins Gleiten, so besteht die Möglichkeit, daß die betreffende Person vom Mast abstürzt und sich in der Regel schwere Verletzungen zuzieht. Aber selbst, wenn das Halteseil als Sicherungsvorrichtung wirksam wird, wird die betreffende Person durch das Halteseil an den Mast herangezogen, was vielfach schwerwiegende Gesichtsverletzungen zur Folge hat.

Es sind zahlreiche Verbesserungen bekannt, um so arbeitende Personen besser gegen Absturz zu sichern. So beschreibt das deutsche Gebrauchsmuster DE-GM 83 12 558 beispielsweise eine Sicherungsvorrichtung bei der zwei Halteseile wechselweise benutzt werden können. Dies stellt zwar eine zusätzliche Sicherung dar, wenn ein Hindernis am Mast oder Baum umklettert werden muß, doch bleibt die grundsätzliche Problematik des Abgleitens erhalten.

Die internationale Patentanmeldung WO 93/14824 schlägt beispielsweise zusätzliche mit Zähnen versehene und dadurch die Reibung erhöhenden Elemente am Halteseil vor. Dies verringert zwar etwas die Gefahr, des Abgleitens doch bleibt auch hier die prinzipielle Problematik erhalten. Außerdem finden sich an einem Mast vielfach Armaturen oder elektrische Ableitungen, die durch scharfkantige Zähne beschädigt oder zerstört werden können. Bei einem Baum können die Zähne zu einer tiefgehenden Verletzung der Baumrinde führen, in der sich dann Schädlinge festsetzen und den Baum schädigen können.

Andere Vorschläge sehen weitere die Reibung erhöhende Elemente an der der Person zugewandten Seite des Mastes vor, die mit dem Halteseil verbunden sind. Dabei kann es sich um eine Kette (US-PS 3 407 898), einen Metallriegel (FR-PS 2 719 778, US-PS 2 879 830) oder ein Metallband (US-PS 2 879 830) handeln. Nach US-PS 5 141 074 wird ein auf der der Person zugewandten Seite des Mastes geführter und mit dem Halteseil verbundener Gurt zusätzlich durch eine Feder vorgespannt. Alle diese Lösungen mögen gut wirksam sein, solange die Person an einer Stelle am Mast arbeitet, doch sind sie sehr unhandlich, wenn man sie lösen muß, um am Mast auf- oder abzusteigen. Das gilt insbesondere dann, wenn die Person Hindernisse am Mast oder Baum (z.B. Kabelableitungen bzw. Zweige) umklettern muß und es dazu notwendig ist, kurzzeitig das Halteseil zu lösen. Außerdem sind die Zusatzvorrichtungen nicht selten auch noch recht schwer, was den Aufstieg auf den Mast erschwert.

Das hohe Gewicht und das Problem, Hindernisse am Mast zu umklettern, sind auch die wesentlichen Probleme, der in der deutschen Offenlegungsschrift DE-OS 37 30 463 beschriebenen Anordnung, bei der ein Metallbügel mit beweglichen Armen um den Mast herumgeführt wird.

Schließlich ist aus der kanadischen Patentschrift CA 1266760 eine Absturzsicherung bekannt, bei der ein zusätzliches Seil mehrfach in Form einer Schlinge, die als "Kellham's Grip" bekannt ist, um den Mast geschlungen und mit seinen Enden in ein am Sicherungsgeschirr befestigtes Halteseil eingehängt ist. Eine Schlinge in Form von "Kellham's Grip wirkt bereits als eigenständige Absturzsicherung und die gesamte Anordnung hält den Kletterer einerseits durch die mehrfache Umschlingung des Masts und andererseits dadurch, daß die mehrfache Umschlingung sich unter Zug zusammenziehen kann. Das Halteseil bewirkt dabei lediglich, daß sich die Enden des zusätzlichen Seils, das die "Kellham's Grip"-Umschlingung bildet nicht zu weit voneinander entfernen und sich dadurch die Umschlingung zu weit öffnet.

Aufgrund der mehrfachen Umschlingung des Mastes ist der Aufwand, das zusätzliche Seil beim Klettern zu verschieben relativ hoch. Außerdem ist es sehr schwierig und zeitaufwendig, diese mehrfache Umschlingung zu lösen und wieder anzubringen, wenn Hindernisse umklettert werden müssen. Schließlich besteht die Gefahr, daß sich "Kellham's Grip" unter Zug nicht zusammenzieht, wenn das zusätzliche Seil derart um den Mast geschlungen ist, daß sich seine Enden bereits berühren.

Der Erfindung liegt daher die Aufgabe zugrunde ein einfaches Hilfsmittel zum Besteigen von Bäumen, Masten und dgl. zu schaffen, das auf der einen Seite das Erklimmen eines Baumes, Mastes und dgl. durch eine Person erleichtert, auf der anderen Seite aber für die Person eine wirksame Sicherungsvorrichtung gegen Absturz darstellt, die beim Abgleiten der Person sofort wirksam wird, zugleich einfach und leicht ist, ein Umklettern von Hindernissen am Mast oder dgl. nicht behindert und den Baum, Mast oder dgl. nicht beschädigt.

Diese Aufgabe wird durch die im Patentanspruch 1 aufgeführten Merkmale gelöst. Vorteilhafte Ausgestaltungen und Modifikationen der Erfindung sind in den Unteransprüchen angegeben.

Danach wird im Gegensatz zu den Sicherungsvorrichtungen nach dem Stand der Technik bei der erfindungsgemäßen Vorrichtung das Halteseil auf der der Person zugewandten Seite des Baumes, Mastes oder dgl. geführt. In das Halteseil ist zumindest über ein Teilstück des Halteseils verschiebbar mit Hilfe von Verbindungsmitteln ein schlaufenförmiges Sicherheitsseil eingehängt, das um die von der Person abgewandten Seite des Baumes, Mastes oder dgl. Mastes so herumgeführt, daß es den Umfang des Baumes, Mastes oder dergleichen nicht vollständig umschlingt und sich erst gemeinsam durch Halteseil und Sicherheitsseil eine vollständige Umschließung des Baumes, Mastes oder dergleichen ergibt.

Verliert die Person nun mit den Füßen den Halt, so wird durch das Gewicht der Person das Halteseil gespannt und überträgt seine Spannung auf das Sicherheitsseil. Das Sicherheitsseil bildet zusammen mit dem Teil des Halteseils, der zwischen den Einhängungen des Halteseils verbleibt, einen geschlossenen Kreis aus beiden Seilen, der den Mast oder dgl. wegen der Seilspannung fest umspannt und folglich nicht nach unten abrutschen kann. Je nach Durchmesser des Mastes oder dgl. und der Länge des Sicherheitsseils rutschen dabei die Einhängungen des Sicherheitsseils so weit auf dem Halteseil zusammen, daß sich der geschlossene gespannte Kreis ergibt. Dies geschieht völlig ohne Zutun der Person. Das erfindungsgemäße Hilfsmittel wirkt auch dann als Absturzsicherung, wenn die Person beispielsweise nach einem Stromunfall bewußtlos sein sollte. Die Haltekraft des erfindungsgemäßen Hilfsmittels als Absturzsicherung ist deutlich größer als die der meisten bisher bekannten Absturzsicherungen, da Halte- und Sicherheitsseil vollflächig am Mast, Baum oder dgl. anliegen und diesen vollständig oder, falls die Verbindungsmittel zum Einhängen des Sicherheitsseils dies nicht gestatten, wenigstens doch fast vollständig umschlingen. Da die Reibungskraft exponentiell mit dem Umschlingungswinkel ansteigt, ist die Haltekraft des erfindungsgemäßen Hilfsmittels wesentlich größer als bei bekannten Anordnungen, bei denen nur ein Teil des Mastes umschlungen wird und zusätzlich Dornen oder Stacheln punktuell in den Mast eingreifen (wie z.B. bei der in US-PS 2 879 830 beschriebenen Anordnung).

Beim normalen Arbeiten überträgt das Halteseil einen Teil der Gewichtskraft der Person wieder auf das Sicherungsseil, das seinerseits die Kraft auf die der Person abgewandte Seite des Masts oder dgl. überträgt und dadurch die Person genau wie beim Arbeiten mit einem herkömmlichen Halteseil abstützt und deren Beine entlastet.

Vorteilhafterweise ist das Sicherungsseil mindestens an einem Ende mit einem lösbaren Verbindungsmittel - beispielsweise mit einem Karabinerhaken - in das Halteseil eingehängt. Damit läßt sich das Sicherheitsseil einfach und schnell in die richtige Lage bringen. Außerdem läßt sich so auch das Sicherheitseil einfach lösen, um ein größeres Hindernis am Mast oder dgl. zu umgehen. Zum Umgehen kleinerer Hindernisse genügt es, das Halteseil zu entlasten und durch Verlängerung des Teilstücks des Halteseils zwischen den Einhängungen des Sicherungsseils den von Sicherungsseil und Halteseil gebildeten Ring zu vergrößern und an den Hindernis vorbeizuführen. Da das Sicherungsseil keine scharfkantigen Teile aufweist, wird eine Beschädigung ebentuell am Mast angebrachter Armaturen und Ableitungen bzw. der Baumrinde vermieden. Zusätzlich kann eine lösbare Befestigung eines Endes des Halteseils an dem Sicherungsgeschirr durch einen Karabinerhaken gebildet sein.

Zur Erleichterung des Besteigen des Baumes, Mastes oder dgl. wird das Sicherungsseil am Baum, Mast oder dgl. hochgeschoben und sodann auf das Halteseil etwas Zug ausgeübt. wie schon zuvor beschrieben, wird dadurch der aus Sicherheitsseil und Halteseil gebildete Ring um den Baum, Mast oder dgl. festgezogen und dort durch Reibung arretiert. Die Seilspannung des Halteseils kann sodann als Kletterhilfe benutzt werden, indem man sich an dem Seil nach oben zieht.

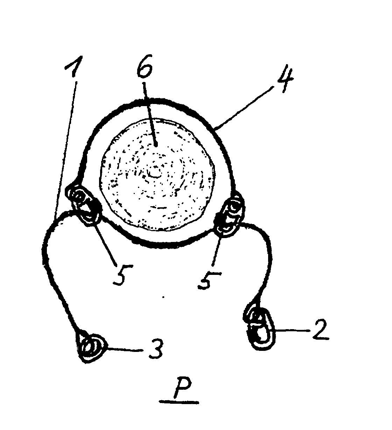

Ein bevorzugtes Ausführungsbeispiel der Erfindung ist in der Zeichnung schematisch dargestellt und wird im folgenden näher beschrieben.

An einem - in der Zeichnung nicht dargestellten - Hüftgurt oder Sicherungsgeschirr ist ein schlaufenförmiges Halteseil 1 befestigt, und zwar dessen eines Ende mittels eines Karabinerhakens 2 und dessen anderes Ende mittels eines Ringes 3. In das Halteseil 1 ist mittels zweier Karabinerhaken 5 ein schlaufenförmiges Sicherheitsseil 4 eingehängt. Eine Person, die das Sicherungsgeschirr (z.B. einen Hüftgurt) trägt, soll auf einen Mast 6 steigen. Hierzu ist das Halteseil 1 auf der der Person P zugewandten Seite des Mastes 6 geführt. Auf der von der Person P abgewandten Seite des Mastes 6 ist das Sicherheitsseil 4 geführt. Sobald von dem Hüftgurt oder Sicherungsgeschirr eine Spannung auf das Halteseil 1 ausgeübt wird, legen sich das Sicherheitsseil 4 und der zwischen den Karabinerhaken 5 liegende Abschnitt des Halteseils 1 an den Mast 6 unter Spannung an und verhindern damit über die Reibungskraft am Mast einen Absturz der Person am Mast. Analog kann auch die Spannung im Halteseil 1 als Kletterhilfe genutzt werden.

Nach der in der Zeichnung dargestellten bevorzugten Ausgestaltung der Erfindung wird das Sicherheitsseil 4 mittels zweier Karabinerhaken 5 lösbar in das Halteseil 1 eingehängt. Dadurch läßt sich die Verbindung beider Seile einfach an beiden Enden des Sicherheitsseils 1 lösen, um etwa größere Hindernisse am Mast zu umgehen. Will man auf diesen Vorteil verzichten kann die Einhängung an einem der beiden Enden des Sicherheitsseils auch unlösbar ausgeführt sein. Dafür kommen beispielweise ein Metallring oder eine geschlossene Seilschlaufe in Frage.

Auch wenn bisher immer von Seilen die Rede war, so ist die Erfindung doch so zu verstehen, daß Halteseil und Sicherheitsseil nicht nur aus einem aus Natur- oder Kunstfasern oder Stahldrähten gebildeten Seil bestehen können, sondern ebenso als Band oder Gurt ausgebildet sein können.

Nach einer weiteren Ausgestaltung der Erfindung enthalten das Halteseil und/oder das Sicherungsseil Mittel zur Änderung ihrer Länge. Derartige Mittel sind dem Fachmann aus der Literatur bekannt. Dadurch kann beispielsweise die Sicherungsvorrichtung an unterschiedliche Arbeitsbedingungen, wie z.B. unterschiedliche Arbeitsabstände vom Mast, angepaßt werden. Ist das Sicherheitsseil in seiner Länge veränderbar, so läßt es sich leicht an unterschiedliche Mastdurchmesser anpassen. Dazu kann das Sicherheitseil beispielsweise aus mehreren durch lösbare Verbindungsmittel miteinander verbundenen Teilstücken bestehen, die je nach erforderlicher Länge in unterschiedlicher Zahl zusammengekuppelt werden.

Eine weitere Ausgestaltung der Erfindung besteht darin, am Halteseil und/oder am Sicherheitsseil zusätzliche die Reibung zwischen Seil und Baum, Mast oder dgl. erhöhende Mittel anzubringen. Diese Mittel können beispielsweise in einer oberflächenbeschichtung der Seile oder einer Bestükkung mit Dornen oder Spikes bestehen. Sinnvollerweise werden diese reibungserhöhenden Mittel dem Material des zu besteigenden Mastes angepaßt. Während Dornen beim Besteigen von Bäumen oder Holzmasten sinnvoll sein mögen, werden sie bei Beton- oder Stahlmasten versagen. Dort sind eher kleine Gummiplatten als reibungserhöhende Mittel sinnvoll.

Ebenso liegt es im Rahmen der Erfindung, daß das Sicherheitsseil wenigstens partiell aus mehreren parallel verlaufenden an ihren Enden beispielsweise mit einem Steg verbundenen Seilstücken besteht und sich dadurch wenigstens partiell die Auflagefläche am Mast erhöht.

Das erfindungsgemäße Hilfsmittel funktioniert umso besser als Absturzsicherung je leichter das Halteseil durch die Einhängungen des Sicherheitsseils gleiten kann. Nach einer weiteren Ausgestaltung des erfindungsgemäßen Hilfsmittels werden daher die Einhängungen des Sicherheitsseils mit einer die Gleit- und/oder Haftreibung reduzierenden Oberflächenbeschichtung versehen. Handelt es sich bei den Einhängungen etwa um Karabinerhaken aus Aluminium, so kann eine solche Reduktion der Reibung z.B. durch Eloxieren der Oberflächen der Karabinerhaken erreicht werden.

Da das erfindungsgemäße Hilfsmittel eine Sicherheitseinrichtung darstellt, die auch tatsächlich benutzt werden sollte, ist es hilfreich, wenn das erfindungsgemäße Hilfsmittel bzw. auch nur das Sicherheitsseil oder die Verbindungsmittel auffällig beispielsweise farbig gekennzeichnet sind. Dadurch werden auch Verwechselungen mit einfachen Verbindungsseilen, die eventuell nicht für die aufzunehmende Last ausgelegt sind, vermieden.

## Patentansprüche

1. Hilfsmittel zum Besteigen eines Baumes, Mastes oder dergleichen und Durchführen von Arbeiten daran durch eine Person, die ein Sicherungsgeschirr oder einen Hüftgurt trägt, wobei
- die beiden Enden eines Halteseils (1) an dem Sicherungsgeschirr oder Hüftgurt befestigt sind,
- das Halteseil (1) weitgehend auf der der Person zugewandten Seite des Baumes, Mastes oder dgl. (6) geführt ist,
- und in dem Halteseil (1) über dessen Länge verschiebbar ein schlaufenförmiges Sicherheitsseil (4) mittels Verbindungsmitteln (5) eingehängt ist,
**dadurch gekennzeichnet, daß**
- das Sicherheitsseil (4) weitgehend auf der von der Person abgewandten Seite des Baumes, Mastes oder dgl. so geführt ist, daß es den Umfang des Baumes, Mastes oder dgl. nicht vollständig umschlingt und sich erst gemeinsam durch Sicherheitsseil(4) und Halteseil (1) eine vollständige Umschließung des Baumes, Mastes oder dgl. ergibt.

2. Hilfsmittel nach Anspruch 1 **dadurch gekennzeichnet, daß** wenigstens eines der Verbindungsmittel (5) lösbar ist.

3. Hilfsmittel nach Anspruch 2 **dadurch gekennzeichnet, daß** wenigstens eines der lösbaren Verbindungsmittel (5) durch einen Karabinerhaken gebildet wird.

4. Hilfsmittel nach wenigstens einem der Ansprüche 1 bis 3 **dadurch gekennzeichnet, daß** das Halteseil (1) und/oder das Sicherheitsseil (4) Mittel zur Änderung ihrer Länge enthalten.

5. Hilfsmittel nach Anspruch 4 **dadurch gekennzeichnet, daß** das Halte- (1) und/oder Sicherheitsseil (4) aus wenigstens zwei durch lösbare Verbindungsmittel miteinander verbundenen Teilstücken bestehen.

6. Hilfsmittel nach wenigstens einem der Ansprüche 1 bis 5 **dadurch gekennzeichnet, daß** am Halte- (1) und/oder Sicherheitseil (4) zusätzliche die Reibung zwischen Halte- (1) und/oder Sicherheitsseil (4) und dem Baum, Mast oder dgl. (6) erhöhende Elemente angebracht sind.

7. Hilfsmittel nach wenigstens einem der Ansprüche 1 bis 6 **dadurch gekennzeichnet, daß** das Sicherheitsseil (4) aus mehreren wenigstens teilweise parallel angeordneten Teilstücken besteht.

8. Hilfsmittel nach wenigstens einem der Ansprüche 1 bis 7 **dadurch gekennzeichet,** daß die Verbindungsmittel (5) zur Einhängung des Sicherheitsseils (4) in das Halteseil (1) mit einer Oberflächenbeschichtung, die die Reibung zwischen Verbindungsmittel (5) und Halteseil (1) verringert, versehen ist.

9. Hilfsmittel nach wenigstens einem der Ansprüche 1 bis 8 **dadurch gekennzeichnet, daß** das Sicherheitsseil (4) und/oder die Verbindungsmittel (5) auffällig gekennzeichnet sind.

## Claims

1. Aid for climbing trees, poles and the like and for carrying out working at those by a person wearing a safety harness or a waist belt, whereby
- both ends of a holding rope (1) are attached to the safety harness or the waist belt,
- the holding rope (1) is largely positioned at the side of the tree, pole or the like (6) which is turned towards the person,
- a loop-type safety rope (4) is suspended in the holding rope (1) by means of connecting means (5),
**characterized in that**
- said safety rope (4) is positioned largely at the side of the tree, pole or the like turned away from the person in a way that it alone does not entirely enclose the girth of the tree, pole and the like and a complete surrounding of the tree, pole and the like is only effected by the safety rope (4) and the holding rope (1) together.

2. Aid as claimed in claim 1, **characterized in that** at least one of said connecting means (5) is detachable.

3. Aid as claimed in claim 2, **characterized in that** at least one of said detachable connecting means (5) is realized by a carabine swivel.

4. Aid as claimed in at least one of claims 1 to 3, **characterized by** the holding rope (1) and/or the safety rope (4) comprising means for changing their length.

5. Aid as claimed in claim 4, **characterized in that** the holding rope (1) and/or the safety rope (4) are composed of at least two sections that are connected by detachable coupling means.

6. Aid as claimed in at least one of claims 1 to 5, **characterized by** additional elements increasing the friction between holding rope (1) and/or safety rope (4) and the tree, pole and the like (6), said elements being attached to the holding rope (1) and/or the safety rope (4).

7. Aid as claimed in at least one of claims 1 to 6, **characterized by** the safety rope (4) consisting of several sections that are at least partly arranged in parallel.

8. Aid as claimed in at least one of claims 1 to 7, **characterized in that** said connecting means (5) employed to suspend the safety rope (4) in the holding rope (1) have a surface coating that reduces the friction between connecting means (5) and holding rope (1).

9. Aid as claimed in at least one of claims 1 to 8 **characterized in that** the safety rope (4) and/or the connecting means (5) are marked conspicuously.

## Revendications

1. Dispositif auxiliaire pour grimper aux arbres, mâts et similaire et pour exécuter des travails à cela par une personne, qui porte un harnais de sécurité ou une sangle de ceinture, dans lequel
- les deux bouts d'une corde de retenue (1) sont attachés à l'harnais de sécurité ou à la sangle de ceinture,
- la corde de retenue (1) est guidée largement au côté de l'arbre, du mât et similaire (6) adjacent à la personne,
- et une corde de sécurité (4) en forme d'une ganse est accroché à la corde de retenue (1) coulissant le long de la corde de retenue avec l'aide des moyens de liaison (5),
**characterisé en ce que**
- la corde de sécurité (4) est guidée largement au côté de l'arbre, du mât et similaire (6) opposé à la personne de manière qu'elle ne boucle pas entièrement la circonférence du arbre, mât et similaire et qu' un enlacement totale est causé seulement par l'ensemble de la corde de sécurité (4) et de la corde de retenue (1).

2. Dispositif auxiliaire selon la revendication 1, **charactérisé en ce qu'** au moins un des moyens de liaison (5) est détachable.

3. Dispositif auxiliaire selon la revendication 2, **charactérisé en ce qu'** au moins un des moyens de liaison détachables est formé d' un mousqueton.

4. Dispositif auxiliaire selon l'une quelconque des revendications 1 à 3, **characterisé en ce que** la corde de retenue (1) et/ou la corde de sécurité contiennent des moyens pour changer leur longeur.

5. Dispositif auxiliare selon la revendication 4, **characterisé en ce que** la corde de retenue (1) et/ou la corde de sécurité (4) sont composées de au moins deux sections raccordées par des moyens de liaison détachables.

6. Dispositif auxiliare selon l'une quelconque des revendications 1 à 5, **charactérisé en ce que** des éléments additionels, qui augmentent la friction entre la corde de retenue (1) et/ou la corde de sécurité (4) et l'arbre, mât et similaire, sont attachés à la corde de retenue (1) et/ou la corde de sécurité (4).

7. Dispositif auxiliare selon l'une quelconque des revendications 1 à 6, **charactérisé en ce que** la corde de sécurité (4) est composée de plusieurs sections, qui sont disposées au moins partiellement en parallèle.

8. Dispositif auxiliare selon l'une quelconque des revendications 1 à 7, **charactérisé en ce que** les moyens de liaison (5) pour accrocher la corde de sécurité (4) à la corde de retenue (1) sont garnis d'un couchage de surface qui réduit la friction entre les moyens de liaison (5) et la corde de retenue (1).

9. Dispositif auxiliare selon l'une quelconque des revendications 1 à 8, **charactérisé en ce que** la corde de sécurité (4) et/ou le moyens de liaison (5) sont marqué voyantement.
